Europäisches Patentamt

European Patent Office

Office européen des brevets

(19)

(11) Numéro de publication : **0 020 202**
**B1**

(12)

# FASCICULE DE BREVET EUROPÉEN

(45) Date de publication du fascicule du brevet :
**11.05.83**

(51) Int. Cl.³ : **G 06 F   9/38**, G 06 F   9/46

(21) Numéro de dépôt : **80400576.7**

(22) Date de dépôt : **25.04.80**

---

(54) **Système multiprocesseur de traitement de signal.**

---

(30) Priorité : **23.05.79 FR 7913199**

(43) Date de publication de la demande :
**10.12.80 Bulletin 80/25**

(45) Mention de la délivrance du brevet :
**11.05.83 Bulletin 83/19**

(84) Etats contractants désignés :
**DE GB IT**

(56) Documents cités :
**EP A 0 013 301**
**DE B 1 549 522**
**US A 3 962 706**
**M. Feilmeier, « Parallel computers-parallel mathematics ». Proceedings of the IMACS (AICA)-GI Symposium. March 14-16, 1977. Techn. Univ. Munich. pp. 275-279**

(73) Titulaire : **THOMSON-CSF**
**173, Boulevard Haussmann**
**F-75379 Paris Cedex 08 (FR)**

(72) Inventeur : **Demeure, Alain**
**"THOMSON-CSF", SCPI 173, Bld Haussmann**
**F-75360 Paris Cedex 08 (FR)**

(74) Mandataire : **Benoit, Monique et al**
**THOMSON-CSF SCPI 173, Bld Haussmann**
**F-75379 Paris Cedex 08 (FR)**

---

Jouve, 18, rue St-Denis, 75001 Paris, France

## Système multiprocesseur de traitement de signal

La présente invention a pour objet un système multiprocesseur utilisant la technique du calcul numérique pour le traitement de signal.

On entend généralement par traitement de signal, ou chaîne de traitement, un ensemble d'étapes de calcul, chacune des étapes étant appelée processus, et comportant des opérations arithmétiques et logiques formant un programme. Ces processus intervenant en traitement de signal se démarquent des calculs informatiques classiques par leur répétitivité, par la structure simple des données qu'ils traitent et leur aptitude à une exécution en parallèle. Ce type de traitement est notamment utilisé dans les domaines du radar et du sonar.

De nombreux systèmes de traitement de signal sont connus, qui tiennent plus ou moins compte des caractéristiques mentionnées ci-dessus. Les architectures possibles pour de tels systèmes sont par exemple décrites dans un article de C. BOZZO (colloque national sur le traitement du signal et ses applications, Nice, 16-21 juin 1975, page 559). Toutefois, il apparaît que, pour le traitement de signal, les systèmes du type multiprocesseur, et plus particulièrement du type connu dans la littérature anglo-saxonne sous les initiales M.I.M.D. (pour Multiple Instruction stream, Multiple Data stream) suivant la classification proposée par FLYN (dans IEEE Transactions on computers, volume 21, numéro 9, sept. 1972), sont particulièrement adaptés aux caractéristiques mentionnées plus haut, en permettant d'augmenter la puissance de calcul et la rapidité.

Dans une structure de ce type, les différents processus sont donc exécutés en parallèle à l'aide de ce qu'on appellera ci-après des moyens d'exécution. Ces moyens d'exécution sont constitués par des opérateurs arithmétiques ou logiques spécialisés ou microprogrammés, des mémoires, et des coupleurs d'entrée-sortie permettant les relations du système avec l'extérieur. Parmi ces moyens d'exécution, certains sont spécifiques à un processus déterminé mais la plupart d'entre eux peuvent être partagés entre plusieurs processus ; les moyens d'exécution de cette dernière catégorie, communs à plusieurs processus, seront appelés ressources.

Pour l'exécution d'un processus déterminé, les moyens d'exécution doivent être mis en relation les uns avec les autres ; cette interconnexion ne doit pas être figée mais au contraire programmable, pour qu'il soit possible de recombiner différemment les moyens d'exécution pour des traitements ultérieurs. Cela est réalisé par la connexion de chacun de ces moyens d'exécution à une liaison unique, multifilaire, généralement appelée Bus.

Cette structure permettant à plusieurs processus de se dérouler simultanément en parallèle en accédant à des moyens d'exécution au moins partiellement communs, il s'impose donc un arbitrage dans le temps.

Une solution consiste à centraliser cette fonction d'arbitrage dans une unité de contrôle, qui fournit alors toutes les décisions tranchant les problèmes de conflit et de synchronisation. Toutefois, cette solution a l'inconvénient de faire de l'unité de contrôle un goulot d'étranglement et par suite de conduire à un temps d'attente prohibitif au niveau de chaque processus. Il est alors toujours possible de multiplier les ressources pour éviter les conflits, mais cette solution comporte des inconvénients évidents de complexité et de coût.

Une telle structure centralisée est par exemple décrite dans l'article Feilmeier, « Parallel Computers — Parallel Mathematics », Proceedings of the IMACS (AICA) — GI, Symposium, March 14-16, 1977, pages 275-279. On connaît encore une machine de traitement de signal (US-A 3 962 706) du type cadencée par les données (« Data Driver »), mais dans laquelle le partage des ressources se limite au partage d'unités de calcul. On connaît également un système de calcul (DE-B 1 549 522) permettant le déroulement simultané de plusieurs programmes et comportant plusieurs unités de traitement ; toutefois l'affectation des unités de traitement aux programmes est faite à l'aide d'un ensemble complexe de circuits centraux. On connaît enfin la demande de brevet européen n° 13 301 publiée le 23 juillet 1980 qui décrit un système multiprocesseur dans lequel le partage des ressources s'effectue par l'intermédiaire d'une étape supplémentaire de classement des ressources, et ce partiellement au niveau du processeur concerné et partiellement au niveau d'un organe central.

La présente invention a pour objet un système de traitement de signal permettant de répondre aux impératifs d'optimisation du partage des ressources, de rapidité et de simplicité, notamment par l'utilisation d'un système multiprocesseur à Bus unique et la décentralisation de la fonction d'arbitrage : à cet effet, le système selon l'invention comporte des moyens indiquant en permanence l'état (effectif) d'occupation des ressources (bus) et des moyens de mémorisation, indiquant, pour chaque instruction susceptible d'être exécutée pour le système, l'état dans lequel doivent être les ressources (« états demandés ») et l'état dans lequel l'instruction restitue ces ressources (« états restitués »). Une comparaison faite à chaque instant, en parallèle au niveau de chaque processus, entre les états effectifs et les états demandés fournit rapidement et sans goulot d'étranglement l'information de sélection potentielle (« éligibilité ») d'un processus.

Plus précisément, le système selon l'invention comporte :

— des moyens d'exécution des processus, comportant au moins une mémoire, des opérateurs de calcul et au moins un coupleur d'entrée-sortie, ces moyens d'exécution étant au moins en partie utilisables alternativement par plusieurs processus ;

— des premiers moyens de transfert du type Bus des informations de calcul entre les moyens d'exécution ;

— des moyens de contrôle de l'exécution des processus ; ce système étant caractérisé par le fait que les moyens de contrôle comportent un ordonnanceur qui est relié à un générateur d'adresses et de connexions, l'ordonnanceur comportant un nombre fini de modules identiques entre eux et affectés de façon biunivoque aux processus, chaque module comportant des mémoires et des circuits logiques et étant reliés entre eux par des seconds moyens de transfert, ces derniers moyens comportant un premier bus sur lequel sont transmis en permanence les états effectifs des moyens d'exécution, un deuxième bus sur lequel sont transmis les états restitués l'indication de l'état dans lequel se trouvera chacune des ressources après l'exécution de l'instruction considérée par un processus des moyens d'exécution, et des moyens logiques pour faire passer les états restitués sur le premier bus d'états effectifs à chaque signal d'horloge, chaque module réalisant pour chaque instruction susceptible d'être exécutée une comparaison entre ses états demandés et les états effectifs, le résultat de la comparaison, dit information d'éligibilité, étant fourni à des moyens de commutation n'autorisant l'élection que d'un seul processus, pour lequel les états restitués seront transférés sur le deuxième bus d'états restitués, le module élu fournissant les informations correspondantes au générateur d'adresses et de connexions.

L'invention est exposée ci-après plus en détail à l'aide de dessins représentant seulement un mode d'exécution.

Les dessins annexés représentent :

la figure 1, le schéma de la structure générale du multiprocesseur selon l'invention ;

la figure 2, un premier mode de réalisation de l'ordonnanceur utilisé dans le système selon l'invention ;

la figure 3, un schéma explicatif relatif à la figure 2 ;

les figures 4 et 5, les schémas logiques de deux circuits de la figure 2 ;

la figure 6, un second mode de réalisation de l'ordonnanceur ;

la figure 7, un schéma explicatif relatif à la figure 6.

Sur ces différentes figures, les mêmes références se rapportent aux mêmes éléments.

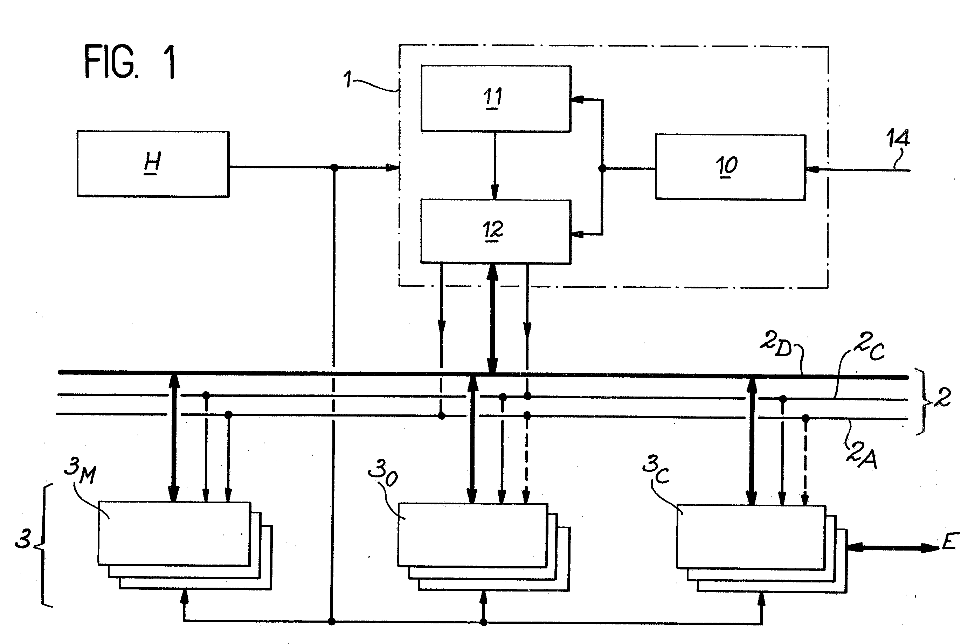

Sur la figure 1, on a donc représenté le schéma général du système selon l'invention. Il comporte principalement :

— un ensemble de moyens d'exécution, repérés globalement 3 ;

— un système de liaison, ou Bus, globalement repéré 2, entre ces différents moyens d'exécution ;

— une unité de contrôle 1.

Les moyens d'exécution 3 comportent, ainsi qu'il est mentionné plus haut :

— un ensemble de mémoires repérées $3_M$ ;

— un ensemble d'opérateurs de calcul $3_O$, arithmétique ou logique ;

— un ensemble de coupleurs $3_C$, assurant les relations du système avec l'extérieur (E).

Ces différents moyens d'exécution $3_M$, $3_O$ et $3_C$ sont de type classique et en nombre quelconque, leur type et leur nombre étant en général adaptés aux applications prévues pour le système.

Le système d'interconnexion 2 de ces moyens d'exécution 3 se compose d'un Bus sur lequel circulent les données, repéré $2_D$, d'un Bus sur lequel circulent les ordres de connexion, repéré $2_C$, et enfin d'un Bus sur lequel circulent les informations d'adressage en mémoire, repéré $2_A$.

Les mémoires $3_M$ sont reliées chacune au Bus de données $2_D$, au Bus de connexions $2_C$ et au Bus d'adressage $2_A$ ; les opérateurs $3_O$ sont reliés au Bus de données $2_D$ et au Bus de connexions $2_C$ et éventuellement au Bus $2_A$ si l'opérateur est programmable (liaison figurée en pointillé sur la figure) ; de même, les coupleurs $3_C$ sont reliés au Bus $2_D$, au Bus $2_C$ et éventuellement au Bus $2_A$. L'ensemble de ces connexions étant réalisé de façon classique, il ne sera pas décrit plus en détail ici.

L'unité de contrôle 1 comporte :

— une unité de gestion 10 recevant sur commande extérieure 14 l'indication du traitement à effectuer sur un signal ; elle a pour fonction d'associer les différents processus qui constituent la chaîne de traitement demandée ; elle est réalisée de toutes façons connues, par exemple à l'aide d'un micro-processeur ;

— un ordonnanceur 11, qui a pour fonction d'arbitrer les conflits de demande d'une même ressource par plusieurs processus, par leur accès aux Bus ; cet ordonnanceur est commandé par l'unité de gestion 10 et il est décrit plus en détail dans les figures suivantes ;

— un générateur d'adresses et de connexions 12, ayant pour fonction d'engendrer les adresses et les ordres de connexions nécessaires aux moyens d'exécution 3, sous la commande des éléments 10 et 11 ; il est relié à cet effet au Bus de connexion $2_C$ et au Bus d'adressage $2_A$, ainsi qu'au Bus de données $2_D$.

Le système selon l'invention comporte encore, classiquement, une horloge H reliée à l'unité de contrôle et à chacun des moyens d'exécution 3.

On rappelle que, au sens défini ci-dessus, une chaîne de traitement de signal est constituée d'un certain nombre d'étapes de calcul appelées processus, chacun des processus étant réalisé à l'aide d'un ensemble d'instructions constituant un programme, enregistré dans une mémoire de programme, propre à chaque processus, qui peut être localisée dans l'unité de contrôle 1 par exemple. L'exécution des processus s'effectue, pour chacun d'eux, instruction par instruction, de manière séquentielle, tantôt pour un processus, tantôt pour un autre, suivant l'état des ressources disponibles.

Le rôle de l'ordonnanceur 11 est de déterminer, à chaque période de l'horloge H, le processus pour lequel une instruction est exécutable ; il en transmet alors l'adresse au générateur 12 qui réalise, d'après l'instruction elle-même, d'une part les connexions vers les moyens d'exécution 3, d'autre part le calcul des adresses des données.

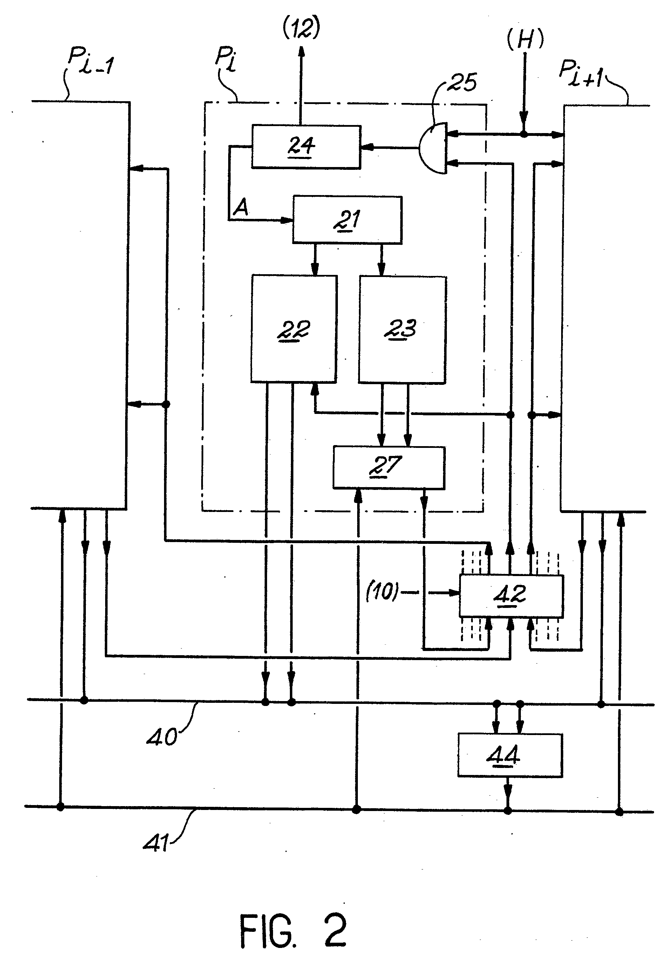

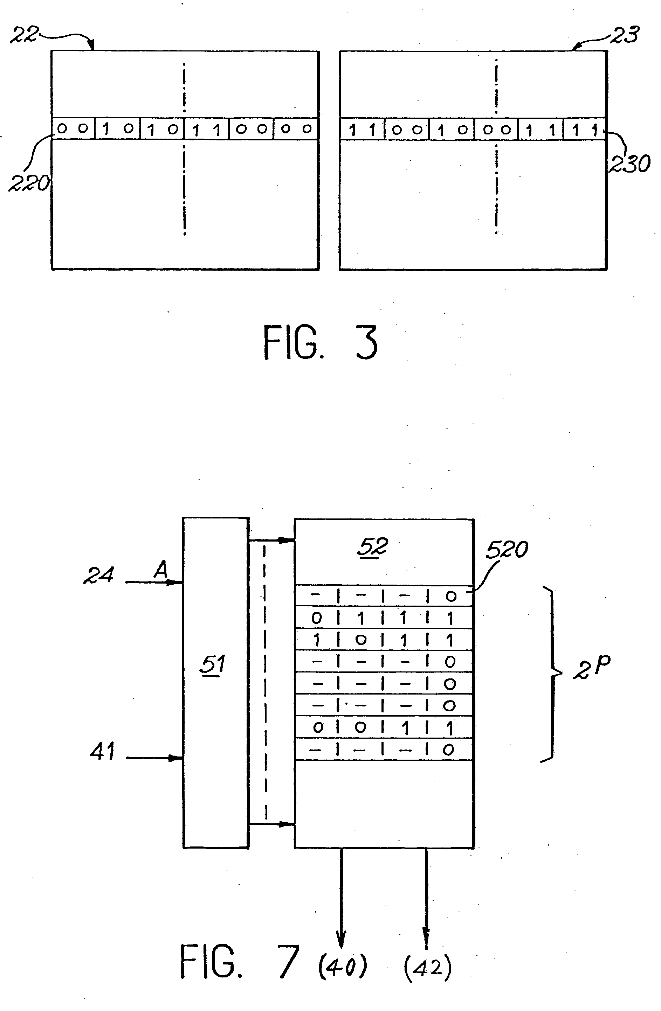

La figure 2 représente un premier mode de réalisation de l'ordonnanceur 11 de la figure précédente.

Cet ordonnanceur comporte principalement :

— un ensemble de N circuits identiques entre eux, appelés modules et repérés $P_{i-1}$, P, $P_{i+1}$ sur la figure, chacun d'eux étant affecté au contrôle des ressources nécessaires à un processus déterminé ; il y a donc autant (N) de modules que de processus exécutables par le système ;

— deux Bus, 40 et 41, permettant le transfert des informations relatives à l'état des ressources.

Chacun des N modules comporte :

— un registre 24, en relation avec le générateur d'adresses 12, qui a pour fonction de mémoriser l'adresse A (en mémoire $3_C$) de la prochaine instruction à exécuter pour le processus correspondant au module (P) considéré ;

— un décodeur d'adresses 21 (qui peut être intégré dans la mémoire 22), recevant l'adresse A du registre 24 ;

— une mémoire 22 à lecture seule, ou mémoire morte, du type ROM ou PROM qui contient, à l'adresse A, des « états restitués » des ressources, c'est-à-dire l'indication de l'état dans lequel se trouvera chacune des ressources après l'exécution de l'instruction considérée. Cet état est l'un des trois suivants : ressource occupée par l'instruction considérée ; ressource libérée par cette instruction ; ressource inchangée, c'est-à-dire qui n'est pas utilisée par le processus et dont, par suite, l'état n'est pas modifié ;

— une mémoire 23 également à lecture seule, qui contient à l'adresse A et pour la même instruction, les « états demandés », c'est-à-dire l'état dans lequel doit se trouver chacune des ressources pour l'exécution de l'instruction considérée.

A titre d'exemple, la représentation binaire des états restitués ou demandés, peut être la suivante :

— ressource inchangée (ou indifférente) : 00
— ressource libérée (ou libre) : 10
— ressource occupée : 11.

Dans cette représentation, le bit situé le plus à gauche est représentatif de la prise en compte de l'état de la ressource par le processus et le bit situé le plus à droite, de l'état de la ressource. Il apparaît que 4 bits sont au total nécessaires pour la gestion d'une ressource.

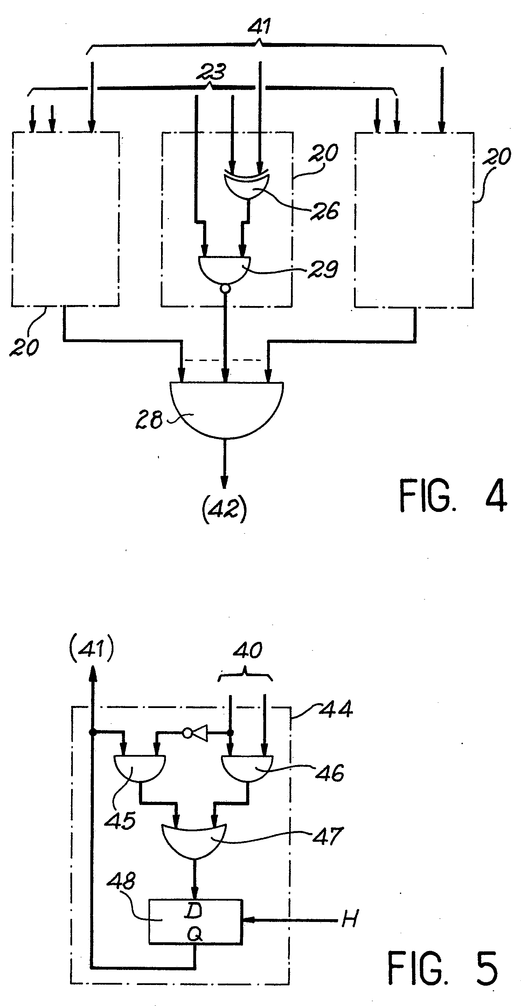

A titre d'exemple encore, la figure 3 illustre le contenu (d'adresse A) des mémoires 22 et 23. On a figuré l'état de six ressources à l'adresse A pour chacune des mémoires 22 (ligne 220) et 23 (ligne 230).

A chaque période de l'horloge H, les états demandés des ressources pour une instruction donnée sont envoyés (sur deux bits) dans un circuit logique d'éligibilité 27, dont un mode de réalisation est représenté figure 4.

Ce circuit 27 reçoit deux types d'informations : les états demandés par l'instruction considérée, en provenance de la mémoire 23, et les états effectifs des ressources, disponibles sur le bus 41 selon un processus décrit plus loin.

Il comporte, comme représenté sur la figure 4, un circuit logique 20 pour chacune des ressources, le circuit 20 étant constitué par :

— une porte logique ou EXCLUSIF 26, recevant d'une part l'information (sur un seul bit) d'état effectif de la ressource provenant du bus 41, et d'autre part, dans l'exemple de codification de l'état des ressources donné ci-dessus, le bit de droite de l'état demandé des ressources en provenance de la mémoire 23 ;

— une porte logique NON-ET 29, recevant d'une part l'information de sortie de la porte 26 et d'autre part le second bit en provenance de la mémoire 23.

La sortie du circuit 20 est un bit égal à 1 si l'état demandé est égal à l'état effectif ou si la ressource est indifférente, et un bit égal à zéro si l'état demandé est différent de l'état effectif. Dans le cas où ce bit est égal à 1, la ressource est donc dans l'état voulu pour l'exécution de l'instruction considérée.

Pour que cette instruction, et par suite le processus auquel elle appartient, soit éligible, il faut que toutes les ressources soient dans un état convenable : pour cela, les sorties des éléments 29 de chacun des circuits 20 sont connectées aux entrées d'une porte logique ET 28, qui fournit à sa sortie un bit représentatif de l'éligibilité du processus, à l'intention d'un circuit de commutation 42.

En se reportant à la figure 2, on voit que le circuit 42 est commun à tous les modules ; il reçoit d'une part l'indication du traitement à effectuer par l'intermédiaire de l'unité de gestion 10, et d'autre part le bit d'éligibilité de chacun des modules ; il choisit alors l'un d'entre eux dans le cas où plusieurs processus se trouvent simultanément éligibles. Ce circuit peut être par exemple constitué de portes logiques NON-OU, donnant la priorité au module (éligible) situé le plus à gauche.

Le choix d'un module par le circuit 42 est rendu effectif par la connexion de la sortie de ce dernier à chacun des modules par l'intermédiaire de portes ET (25) placées, dans chaque module, entre le signal d'horloge H et le registre 24. Il a également pour effet d'autoriser le transfert du contenu du registre 24, c'est-à-dire l'adresse de l'instruction exécutable, vers l'élément 12, chargé de calculer les adresses et d'autoriser les connexions.

Il est à noter que l'élément 12 peut avantageusement être divisé en N modules identiques entre eux, qui contiennent un ensemble d'instructions explicitant les adresses et les connexions à réaliser au niveau des moyens d'exécution, chaque module de l'élément 12 étant affecté de façon biunivoque à un module (P) de l'ordonnanceur.

La sortie du circuit 42 est également utilisée, au niveau de chaque module (P), pour autoriser le transfert des états restitués (sur deux bits pour chaque ressource) contenus dans la mémoire 22 vers le bus 40.

Les états restitués disponibles sur le bus 40 sont transmis (sur deux bits) à un circuit logique 44 fournissant au bus 41 un seul bit d'état effectif de ressources.

Ce circuit 44 est représenté figure 5 pour une seule ressource. Il comporte :

— une première porte logique ET 46, recevant les deux bits d'état restitué en provenance du bus 40 ;

— une seconde porte ET 45, recevant le bit restitué de gauche après inversion et le signal de sortie d'une bascule 48 ;

— une porte logique OU 47, recevant les sorties des deux précédentes ;

— la bascule 48, de type D, c'est-à-dire dont la sortie Q est identique à l'entrée D de la période d'horloge précédente. La sortie Q de la bascule 48 fournit au bus 41 le bit représentant l'état effectif de la ressource.

Ce circuit 44 permet d'obtenir un bit d'état effectif qui est soit identique à ce qu'il était à la période d'horloge précédente, soit au bit de droite de l'état restitué, avec la convention de représentation donnée plus haut, suivant que le bit de gauche est respectivement égal à 0 ou à 1.

Dans ce mode de réalisation, tel que décrit figures 2 à 5, il est à noter que le choix de l'instruction d'un processus est fait extérieurement aux mémoires 22 et 23 des modules.

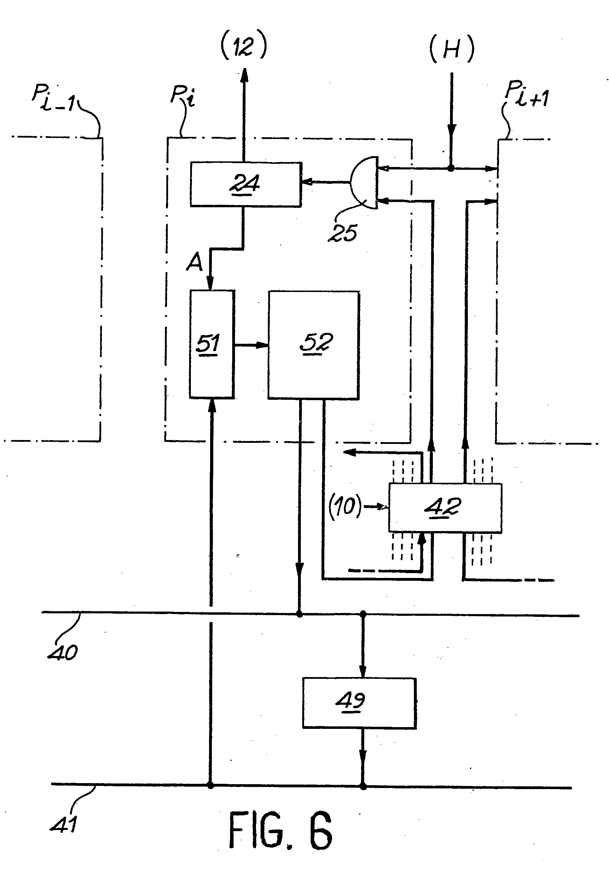

La figure 6 représente un second mode de réalisation de l'ordonnanceur utilisé dans le système selon l'invention.

Comme précédemment, l'ordonnanceur comporte N modules ($P_{i-1}$, P, $P_{i+1}$), chacun correspondant à un processus prédéfini, un bus d'états restitués 40 et un bus d'états effectifs des ressources 41.

Chacun des modules comporte :

— le registre 24 mémorisant l'adresse (A) de l'instruction en attente d'exécution dans le processus considéré ;

— un décodeur d'adresses 51, recevant l'adresse A du registre 24 et l'indication des états effectifs des ressources du bus 41 ;

— une mémoire 52 reliée au décodeur 51, contenant, pour chaque instruction (d'adresse A) du processus considéré, l'ensemble des combinaisons possibles des états des différentes ressources.

Dans cette configuration, le processus est déclaré éligible si les états effectifs des ressources (fournis à la mémoire 52 par l'intermédiaire du décodeur 51) sont identiques aux états nécessaires (demandés) pour l'exécution de l'instruction considérée.

La figure 7 est un schéma explicatif, représentant un exemple du contenu de la mémoire 52 pour trois ressources.

Sur cette figure, sont représentés le décodeur d'adresses 51 et la mémoire 52. A chaque adresse A reçue par le décodeur 51, correspond en mémoire 52 l'ensemble des combinaisons des états possibles des ressources : dans l'exemple présent, huit combinaisons possibles, représentées par huit lignes, pour trois ressources, l'état de chacune des ressources étant représenté par un bit, et plus généralement $2^P$ combinaisons de p bits pour p ressources. De plus, à chacune des combinaisons est associé un bit supplémentaire (520) dit bit d'éligibilité partielle, positionné à 1 lors de la programmation de la mémoire 52 pour les configurations de trois bits précédents qui représentent des états susceptibles d'être demandés par le processus géré par le module (P) considéré : dans l'exemple de la figure 7, seulement les deuxième, troisième et septième configurations possibles correspondant à des états susceptibles d'être demandés par le processus considéré. Dans ce mode de réalisation, les états demandés des ressources n'apparaissent donc plus, comme précédemment, de manière explicite en sortie de la mémoire.

L'information d'états effectifs en provenance du bus 41 s'ajoute à l'adresse A pour constituer l'adresse d'une des lignes de la mémoire 52. Lorsque le bit d'éligibilité partielle (520) de cette ligne est égal à 1, la mémoire 52 fournit au bus 40 l'indication des états restitués des ressources et au circuit 42 l'indication de l'éligibilité du processus.

Le fonctionnement de cette structure est ensuite identique à ce qui est décrit pour la figure 2, à ceci près que le circuit 44 est remplacé par un circuit 49, plus simple (uniquement à base de bascules de type D) du fait que, dans ce mode de réalisation, et les états effectifs et les états restitués ne sont exprimés que sur un bit.

Il est à noter que dans ce mode de réalisation, comme dans le précédent, des éléments comme les mémoires (22, 23 ou 52) de l'ordonnanceur peuvent être subdivisés en deux ou plusieurs parties, selon les contraintes technologiques rencontrées, chacune des mémoires gérant alors un nombre restreint de ressources, à la seule condition d'être ensuite reliées par des circuits logiques convenables, à base de portes ET par exemple.

Le mode de réalisation de la figure 6 apparaît présenter plusieurs avantages sur celui de la figure 2, notamment :

— la réduction du nombre de bits en sortie mémoire nécessaires à définir les états restitués ;

— la réduction du nombre de circuits logiques (le circuit 27 de la figure 2 n'est plus nécessaire) ;

— l'augmentation de la rapidité de traitement due à la suppression du circuit 27 ;

— la souplesse du système : il est en effet aisément reconfigurable pour le traitement d'autres processus car il suffit de modifier la programmation des mémoires 52 et des modules correspondants du générateur 12.

Par contre, un inconvénient en est l'augmentation de la capacité nécessaire pour les mémoires 52.

A titre d'exemple, il est possible d'atteindre avec le système selon l'invention une grande puissance d'échange sur le bus, de l'ordre de $10^7$ opérations par seconde, avec une période d'horloge de l'ordre de 100 ns, du fait d'une caractéristique de ce système suivant laquelle la gestion des ressources est effectuée à l'échelle de la période d'horloge.

**Revendications**

1. Système multiprocesseur de traitement de signal, chaque traitement de signal comportant un nombre fini de processus, ce système comportant :
— des moyens d'exécution (3) des processus, comportant au moins une mémoire ($3_M$), des opérateurs de calcul ($3_O$) et au moins un coupleur d'entrée-sortie ($3_C$), ces moyens d'exécution étant au moins en partie utilisables alternativement par plusieurs processus ;
— des premiers moyens de transfert du type Bus (2) des informations de calcul entre les moyens d'exécution (3) ;
— des moyens de contrôle (1) de l'exécution des processus ;
ce système étant caractérisé par le fait que les moyens de contrôle (1) comportent un ordonnanceur (11) qui est relié à un générateur d'adresses et de connexions (12), l'ordonnanceur (11) comportant un nombre fini de modules (P) identiques entre eux et affectés de façon biunivoque aux processus, chaque module comportant des mémoires et des circuits logiques et étant reliés entre eux par des seconds moyens de transfert, ces derniers moyens comportant un premier bus (41) sur lequel sont transmis en permanence les états effectifs des moyens d'exécution (3), un deuxième bus (40) sur lequel sont transmis les états restitués (l'indication de l'état dans lequel se trouvera chacune des ressources après l'exécution de l'instruction considérée) par un processus des moyens d'exécution (3), et des moyens logiques (44, 49) pour faire passer les états restitués sur le premier bus (41) d'états effectifs à chaque signal d'horloge, chaque module (P) réalisant pour chaque instruction susceptible d'être exécutée une comparaison entre ses états demandés et les états effectifs, le résultat de la comparaison, dit information d'éligibilité, étant fourni à des moyens de commutation (42) n'autorisant l'élection que d'un seul processus, pour lequel les états restitués seront transférés sur le deuxième bus (40) d'états restitués, le module ($P_i$) élu fournissant les informations correspondantes au générateur d'adresses et de connexions (12).

2. Système selon la revendication 1, caractérisé par le fait que chacun des modules ($P_i$) de l'ordonnanceur (11) comporte :
— une première mémoire (23) dans laquelle sont inscrits les états demandés des moyens d'exécution (3) pour chacune des instructions constituant le processus correspondant au module considéré ;
— une seconde mémoire (22) dans laquelle

sont inscrits les états restitués des moyens d'exécution par chacune des instructions précédentes, reliée au second bus (40) des états restitués ;
— un circuit logique d'éligibilité (27), relié à la première mémoire (23), et au premier bus (41) des états effectifs, fournissant l'information d'éligibilité.

3. Système selon la revendication 1, caractérisé par le fait que chacun des modules ($P_i$) de l'ordonnanceur (11) comporte une mémoire (52) dans laquelle est enregistré, pour chaque instruction constituant le processus considéré, l'ensemble des configurations d'états possibles pour les moyens d'exécution (3), chaque configuration étant accompagnée de l'information (520) d'éligibilité, indiquant parmi toutes les configurations celles qui sont utilisables par le processus considéré.

4. Système selon la revendication 3, caractérisé par le fait que l'information fournie par le premier bus (41) des états effectifs est associée à l'adresse (A) de l'instruction en attente d'exécution afin de former l'adresse de l'une des configurations des états des moyens d'exécution.

5. Système selon l'une des revendications précédentes, caractérisé par le fait que chacun des modules ($P_i$) de l'ordonnanceur (11) comporte de plus un registre (24) mémorisant l'adresse (A) de l'instruction en attente d'exécution dans le processus considéré, ce registre (24) étant commandé par les moyens de commutation (42).

**Claims**

1. Multiprocessor signal processing system, each signal processing operation comprising a limited number of processes, the system comprising :
— execution means (3) for execution of the processes, comprising at least one memory ($3_M$), calculation operators ($3_O$) and at least an input-output coupler ($3_C$), the execution means being adapted to be at least partially alternatively used by a plurality of processes ;
— first transfer means (2) of bus type for the transfer of the calculation information between the execution means (3) ;
— control means (1) for controlling the execution of the processes ;
the system being characterized by the fact that the control means (1) comprise an allotting unit (11) connected to an address and connection generator (12), the allotting unit (11) comprising a limited number of identical modules (P) associated with the processes in mutually unequivocal manner, each module comprising memories and logic circuits, and the modules being interconnected by second transfer means comprising a first bus (41) on which the effective states of the execution means (3) are permanently transmitted, a second bus (40) on which the states restituted by a process of the execution means (3) (the indication of the state in which each of the sources will be after the execution of the instruction considered) are transmitted, and logic means (44, 49) for gating the restituted states onto the first, effective state bus (41) at each clock signal, each module (P) performing, for each instruction susceptible of execution, a comparision between its requested states and the effective states, the result of the comparison, termed electability information, being supplied to switching means (42) enabling the election of only a single process for which the restituted states will be transferred through the second, restituted states bus (40), the elected module (P$_i$) supplying information corresponding to the address and connection generator (12).

2. System in accordance with claim 1, characterized by the fact that each of the modules (P$_i$) of the allotting unit (11) comprises :
— a first memory (23) in which the requested states of the execution means (3) are stored for each of the instructions forming the process corresponding to the module considered ;
— a second memory (22) in which the states of the execution means restituted by each of the preceding instructions are stored and which is connected to the second, restituted states bus (40) ;
— a logic electability circuit (27) connected to the first memory (23) and to the first, effective states bus (41) and supplying the electability information.

3. System in accordance with claim 1, characterized by the fact that each of the modules (P$_i$) of the allotting unit (11) comprises a memory (52) in which the totality of the possible state configurations of the execution means (3) are stored for each instruction forming the process considered, each configuration being accompanied by the electability information (520), indicating those among all of the configurations which are adapted to be used by the process considered.

4. System in accordance with claim 3, characterized by the fact that the information provided by the first, effective states bus (41) is associated with the address (A) of the instruction waiting for execution in order to form the address of one of the configurations of the states of the excution means.

5. System in accordance with any of the preceding claims, characterized by the fact that each of the modules (P$_i$) of the allotting unit (11) further comprises a register (24) storing the address (A) of the instruction waiting for execution in the process considered, this register (24) being controlled by the switching means (42).

**Ansprüche**

1. Multiprozessor-Signalverarbeitungssystem, worin jede Signalverarbeitung eine endliche Anzahl von Prozessen umfaßt, enthaltend :
— Mittel (3) zur Ausführung der Prozesse, mit wenigstens einem Speicher (3$_M$), Rechenoperatoren (3$_O$) und wenigstens einem Eingangs/Ausgangs-Koppler (3$_C$), wobei diese Ausführungsmittel wenigstens teilweise abwechselnd durch mehrere Prozesse benutzbar sind ;
— erste Übertragungsmittel (2) vom Typ einer Busleitung zum Übertragen der Recheninformationen zwischen den Ausführungsmitteln (3) ;
— Steuermittel (1) zum Steuern der Ausführung der Prozesse ;
wobei das System dadurch gekennzeichnet ist, daß die Steuermittel (1) eine Zuteilungseinheit (11) umfassen, die mit einem Adressen- und Anschlußgenerator (12) verbunden ist und eine endliche Anzahl von einander gleichen Moduln (P) aufweist, die den Prozessen eineindeutig zugeordnet sind, wobei jeder Modul Speicher und logische Schaltungen umfaßt und die Moduln untereinander durch zweite Überführungsmittel verbunden sind, die eine erste Busleitung (41), auf der dauernd die effektiven Zustände der Ausführungsmittel (3) übertragen werden, eine zweite Busleitung (40), auf der die durch einen Prozess der Ausführungsmittel (3) wiederhergestellten Zustände (Anzeige des Zustandes, in dem sich jede der Quellen nach der Ausführung des betreffenden Befehles befinden wird) übertragen werden, und logische Einrichtungen (44, 49) enthalten, um die wiederhergestellten Zustände auf der ersten Busleitung (41) zur Übertragung der effektiven Zustände bei jedem Taktsignal durchzulassen, wobei jeder Modul (P) für jeden ausführbaren Befehl einen Vergleich zwischen seinen angeforderten Zuständen und den effektiven Zuständen durchführt und das als Auswählbarkeitsinformation bezeichnete Ergebnis des Vergleichs Schalteinrichtungen (42) zugeführt wird, die das Auswählen nur eines einzigen Prozesses zulassen, für den die wiederhergestellten Zustände über die zweite Busleitung (40) für die wiederhergestellten Zustände übertragen werden, und wobei der ausgewählte Modul (P$_i$) die entsprechenden Informationen dem Adressen- und Anschlußgenerator (12) zuführt.

2. System nach Anspruch 1, dadurch gekennzeichnet, daß jeder der Moduln (P$_i$) der Zuteilungseinheit (11) umfaßt :
— einen ersten Speicher (23), in dem die angeforderten Zustände der Ausführungsmittel (3) für jeden der Befehle eingeschrieben sind, welche den Prozess bilden, der dem betreffenden Modul entspricht ;
— einen zweiten Speicher (22), in dem die durch jeden der vorausgehenden Befehle wiederhergestellten Zustände der Ausführungsmittel eingeschrieben sind und der an die zweite Busleitung (40) für die wiederhergestellten Zustände angeschlossen ist ;
— eine Wählbarkeits- Logikschaltung (27), die an den ersten Speicher (23) und an die erste Busleitung (41) der effektiven Zustände angeschlossen ist und die Wählbarkeitsinformation liefert.

3. System nach Anspruch 1, dadurch gekennzeichnet, daß jeder der Moduln (P$_i$) der Zuteilungseinheit (11) einen Speicher (52) aufweist, in dem für jeden den betreffenden Prozess bildenden Befehl die Gesamtheit der möglichen Zustandskonfigurationen der Ausführungsmittel (3) gespeichert ist, wobei jede Konfiguration von der Wählbarkeitsinformation (520) begleitet ist, welche unter allen Konfigurationen diejenigen angibt, die für den betreffenden Prozess verwendbar sind.

4. System nach Anspruch 3, dadurch gekennzeichnet, daß die von der ersten Busleitung (41) der effektiven Zustände gelieferte Information der Adresse (A) des auf die Ausführung wartenden Befehls zugeordnet ist, um die Adresse einer der Konfigurationen der Zustände der Ausführungsmittel zu bilden.

5. System nach einem der vorstehenden Ansprüche, dadurch gekennzeichnet, daß jeder Modul ($P_i$) der Zuteilungseinheit (11) ferner ein Register (24) enthält, das die Adresse (A) des auf die Ausführung wartenden Befehles in dem betrachteten Prozess speichert und durch die Schalteinrichtungen (42) gesteuert ist.

FIG. 1

0 020 202

FIG. 2

22

23

220

| 0 | 0 | 1 | 0 | 1 | 0 | 1 | 1 | 0 | 0 | 0 | 0 |

| 1 | 1 | 0 | 0 | 1 | 0 | 0 | 0 | 1 | 1 | 1 | 1 |

230

## FIG. 3

24  A

41

51

52    520

| – | – | – | O |
| O | 1 | 1 | 1 |
| 1 | O | 1 | 1 |
| – | – | – | O |
| – | – | – | O |
| – | – | – | O |
| O | O | 1 | 1 |
| – | – | – | O |

$2^P$

## FIG. 7  (40)   (42)

FIG. 4

FIG. 5

FIG. 6